# EUROPEAN PATENT SPECIFICATION

(11) **EP 3 728 715 B1**
(45) Date of publication and mention of the grant of the patent: **04.09.2024**
(21) Application number: 18865346.3
(22) Date of filing: 13.06.2018
(51) Int. Cl.: D04B 21/14, D04B 21/04

(54) **OBTAINING WARP KNIT FABRICS FROM COTTON YARN WITH WARP KNITTING MACHINES AND WARP KNIT FABRIC OBTAINED**
HERSTELLUNG VON KETTENGEWIRKEN AUS BAUMWOLLGARN AUF EINER KETTENWIRKMASCHINE UND HERGESTELLTES KETTENGEWIRK
OBTENTION DE TISSUS TRICOTÉS EN MAILLES JETÉES À PARTIR D'UN FIL DE COTON À L'AIDE DE MÉTIERS À TRICOTER EN MAILLES JETÉES AINSI QUE LE TRICOT OBTENU

(30) Priority: 19.12.2017 TR 201720766
(43) Date of publication of application: 28.10.2020
(73) Proprietor: Veritas Tekstil Konfeksiyon Pazarlama Sanayi ve Ticaret Anonim Sirketi, Honaz/Denizli (TR)
(72) Inventor: SOYLU, Mustafa, Denizli (TR)
(74) Representative: Yamankaradeniz, Kemal
(86) International application number: PCT/TR2018/050309
(87) International publication number: WO 2019/125318

(56) References cited:
- EP-A1- 0 090 289
- EP-A2- 0 429 802
- WO-A1-2007/095655

## Description

### Technical Field

The invention relates to a method for obtaining warp knit fabrics (spacer fabrics) made of 100% cotton yarn with warp knitting machines, and a fabric obtained by this method.

The invention in particular relates to a method for obtaining terry or non- terry warp knit spacer fabric (spacer fabric) with or without pile from 100% cotton yarns with increased elasticity and tensile strength due to modified torsion and twisting values, using warp knitting machines, intended to be used in the design of different constructions.

### Background Art

Forming loops from threads and tying these loops together are called knitting, and fabrics obtained by tying the obtained loop to other previously formed loops by means of special tools such as knitting needles, crochet hooks, needles are called knit fabrics or tricots, where the mentioned fabrics have a widespread area of use such as medicine, construction, sports, packaging, automotive, military, clothing etc. Systems where the thread forms loops along the width of the fabric are called weft knitting systems, where the systems with loops formed along the length of the fabric are called warp knitting systems. While the fabric is formed by connecting a thread to itself over and over again in weft knitting system, it is formed by connecting a series of threads to each other in the warp knitting system along the warp direction.

In warp knitting technique, which is the fastest fabric manufacturing technique, threads which are going to form the fabric are wound on warp beams and delivered all together to the knitting area, as in the case of weaving machines. Each needle receives at least one thread and all of the needles are raised up all together at the same time in order to form the loop and loops are formed at each horizontal and vertical row. All needles move along needle rails together in warp knitting machines.

Warp knit fabrics in general can be distinguished by a vertical thread flow, and meanwhile, threads are usually fed by warp beams and/or coil hangers. With a wide area of applications, it is possible to implement a large number of applications which differ from each other in terms of pattern, number and required knitting members and thread feeding systems, using a variety of different machinery.

Warp knit fabrics are manufactured by feeding the knitting needles with threads wound off from a warp beam in order to be put through needles with holes and to form loops, and they are fabrics exhibiting similar features to woven fabrics in terms of dimensional stability. Warp knit fabrics are more stable with respect to weft knit fabrics and their loops are less apparent. Elasticity of warp knit fabrics is lower. Warp knit fabrics can be distinguished from weft knit fabrics by a careful inspection of their face and back. Face of the fabric is composed of fairly clear, apparent face loops, where the loops are arranged vertically and at a slight angle form one side to the other. The back of the fabric has slightly inclined horizontal lines. These lines are called threads from above and from below and formed by the lateral motion of the warp threads that form the fabric. Identifying these threads are the most important distinction that the warp knitting possess, while the most distinguishing feature is being resistant to unraveling.

The knitting surface is formed by establishing connected loops through following lengthwise and lateral zigzag patterns. This feature makes it harder for the texture to unravel and the loop to run in the warp knitting. Furthermore, elasticity of knitting is very low.

Loops used in warp knitting are formed in two different ways in terms of the structure of the bottom loop and the appearance they lead to in the structure, called open loop and closed loop. Having a cross bottom loop is the most important feature of the closed loop, while not having a cross bottom loop is the important feature of the open loop.

Warp knitting machines are classified under two groups named tricot (warp apparatus) and raschel. In past, bearded needles were used in tricot machines, while latch needles were used in raschel machines. It was possible to identify if it was a tricot or a raschel machine based on the needle type. Today, both needles have been replaced by compound needles (slider needles).

In order to identify the machine at which the fabric is produced, used plating and the role of the plating in loop formation is playing an important role.

Texturing is formed by putting the weaving layout, i.e. the warp threads coming from the beams, through the inlay needles with holes, by means of the lateral motion of the inlay rails in front of and behind the knitting needles.

Bearded needles are used in straight warp knitting machines where RL-bearded needles having two perpendicular bearings are used, and the lower needle bearing only performs oscillating motion while the upper needle bearing performs both oscillation and forward-backward motion. Moreover, thread guides are also available in the machine in order to aid the knitting.

Tongue needles are used in straight warp knitting machines where RL-tongue needles having two perpendicular bearings are used, and the lower needle bearing performs forward-backward motion while the upper needle bearing performs oscillation and forward-backward motion. Again, thread guides are also available in the machine in order to aid the knitting.

Latch needles are used in straight warp knitting machines where RL-latch needles having two perpendicular bearings are used, and the lower needle bearing only performs forward-backward motion, while the upper needle bearing performs both oscillation and forward-backward motion. Thread guides are also available in the machine in order to aid the knitting.

Bearded needles are used in RL-monorail straight warp knitting machines (Milano type) having two perpendicular bearings, and while the lower needle bearing only performs forward-backward motion, the upper needle bearing performs both oscillation and forward-backward motion, in addition to a motion similar to rotation. Again, thread guides are also available in the machine in order to aid the knitting.

RL-monorail straight warp knitting machine (Scope type): Bearded needles are used in this simple machine where a single, horizontal needle bearing is present, and needles perform forward-backward motion inside the needle bearing.

Straight warp knitting machine where RR-tongue needle is used (Raschel type): In these more complicated knitting machines, tongue needles move inside higher number of needle bearings, which allow higher freedom of motion. Lower bearings are positioned at angle with respect to each other, instead of being straight. Similarly, number of used thread guides are also increased.

In RR-straight warp knitting machines (Simplex type), both the lower and the upper bearings are introduced at a certain angle with respect to each other. The upper bearings perform oscillations and forward-backward motion, while the lower bearings perform forward-backward motion. Bearded needles are used and thread guides are available.

Sandwich textiles (spacer fabrics) are three dimensional textile structures comprising two outer surfaces and a binding layer which binds these two outer surfaces. Sandwich textiles possess specific features due to their special structures, which cannot be achieved by conventional textile structures. Even though sandwich textiles are fairly new in terms of technology, the demand towards special textile structures has increased the attention they draw. Therefore, research and development activities regarding sandwich textiles have become more interesting in the recent years. Research on sandwich textiles allowed production of sandwich textiles with different features intended to be used in various application areas. While sandwich textiles can be manufactured using weaving, weft knitting and warp knitting techniques, warp knitting technique is the most commonly used among them. Sandwich textiles allow using a variety of materials, have a flexible product range and possess three dimensional structures, which make them possible to be used in a number of different areas such as automotive textiles, geotextiles, sportswear, underwear and outerwear, protective textiles and composites.

Warp knitting technology is the most commonly used technology for manufacturing sandwich textiles (spacer fabric) and the sandwich textiles manufactured using warp knitting techniques have a much wider range in terms of physical and physiological features, in comparison to classical woven or knit fabrics.

Warp knit sandwich textiles are produced using Raschel machines with double needle rails, based on the principle of manufacturing two separate fabrics on two needle rails of the machine and binding these two fabrics by means of suitable binding threads. Manufacturing of fabric surfaces are carried out on the front and back needle rails of the machine. The construction of the main surfaces is selected based on the features expected from the end product and realized through a combination of inlaying and drafting processes.

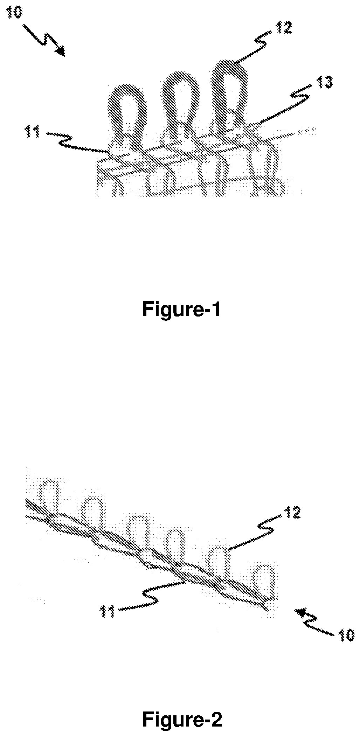

There are 4 inlay rails in double needle rail Raschel machines used in warp knit sandwich textile production. 1^{st} and 4^{th} inlay rails are used for production of the outer surfaces of the sandwich textile and drafted based on the desired outer surface pattern. In Figure 2, a schematic representation is shown of the warp knit sandwich textile manufacturing principle in double needle rail Raschel machines (20).

By using a different draft at each inlay rail, different surface constructions can be achieved. 1^{st} inlay rail inlays for only the 1^{st} needle rail and the 4^{th} inlay rail inlays for only the 2^{nd} needle rail, while the 2^{nd} and 3^{rd} inlay rails inlay for both needle rails. By means of the inlaying for both of the needle rails by the 2^{nd} and the 3^{rd} inlay rails, binding threads bind two main fabric surfaces. Depending on the product features and the requests expected from the demanded product, a minimum of four inlay rails are used. In general, however, 5 to 7 inlay rails are used.

In double needle inlay rail Raschel machines, sandwich textiles with thickness varying between 1.5 mm and 160 mm can be produced. The thickness of the sandwich textile is set by adjusting the distance between two needle rails depending on the desired sandwich textile thickness. Sandwich textiles up to 20 mm thickness can be manufactured in Raschel machines without requiring any modification. On the other hand, for the production of sandwich textiles having more than 20 mm thickness and called "High Distance (Very Thick) warp knit sandwich textiles", modifications in Raschel machines are necessary. Furthermore, it is also possible with Raschel machines to manufacture sandwich textiles shaped on the machine depending on the end product.

Sandwich textiles provide food physiological comfort due to providing a combination of air, humidity and heat transport and permeability properties. Furthermore, compressibility strength property additionally improves this characteristic. All these features provide a microclimate effect to sandwich textiles. Therefore, these features allow sandwich textiles to be used in sportswear, mattresses and medical industry.

While in simple knitting cycles, needle rods run independently during upward and downward motion, guiding rods oscillate alternatingly between needles of each rod.

The thread introduced along the rod inside the knit structure is called "warp inlaying". It is not possible to establish warp inlaying in current weft knitting machines, without making any modifications.

A high number of needles are used during warp knitting and all needles perform the same motion at the same time. In order to obtain a loop form, each warp line should feed a needle. Needles used in warp knitting machines are in general arranged on a needle rail in a straight line.

Each warp thread is put through the hole of a reed needle. Reed needles with holes are lined up on an inlay rail (reed). Due to the motion of the reed, warp threads are entangled to the needles. Motion of the needle rail leads the warp threads to simultaneously form loop forms.

The reed performs the motion called inlaying. Because with this inlaying, each reed needle with hole (along with the warp thread), performs a lateral motion (jump) behind the needle (lower inlaying). Thereafter, reed needles with holes perform oscillation in between two needles towards inside. With the lateral motion, the warp threads are inlaid to the stems of the needles and the reed needles passing in between two neighbor needles perform oscillation towards outside thus completing the motion set. Following the oscillation towards outside, threads are inlaid on the needle hooks with the descending motion of the needles, these thread move through the available loops resulting in a new row of loops.

Knitting elements and thread geometry (thread angle) of tricot machines are different from that of other machines. Plating rail moves along forward-backward direction horizontally. The needle rail moves along up-down direction along with the latch needles. The same motion is also independently performed by the needle latch rail. The inlay rail, where the reed needle with hole is located, also performs motion along the forward-backward and left-right directions depending on the pattern.

The knitting elements are positioned at about a 90 degree angle. Therefore, when the thread geometry is investigated, it can be seen that the combined force on the needle is high.

In the beginning of knit formation, the latch needle is at the bottommost position and a loop is present at the head portion of the needle. The reed, and each reed needle with hole along with it, perform lower inlaying. Meanwhile, plating rail continues its forward motion and consequently pushes forward and grabs the loop at the head of the needle and the fabric behind it.

The latch needle (except the latch) starts ascending motion and meanwhile, the knit loop (since it is connected to the readily knit fabric) is maintained unser tension. Thereby the fabric is prevented to ascend with the needle, while, on the other hand, needle stem is sliding. Meanwhile, the inlay rail have completed the lower inlaying motion.

The latch needle ascends to the uppermost position. The latch also ascends but not as much to close the hook of the needle. The reed passes between two latch needles by performing oscillation towards inside and reaches the gap between two needles.

The reed needle with hole performs upper inlaying to the stem of the latch needle. The inlay needle passes between needles by performing oscillation towards outside while at the same time the a new loop is placed at the head portion of the latch needle. (Compression)

While the needle and its latch are performing descending motion at different speeds (needle is fast, latch is slow), head of the needle closes. At the same time, the tension on the needle weakens. Therefore, loop becomes able to slide on the latch towards the needle stem (casting loop). Meanwhile, the reed needles with holes starts a new lower inlaying. While the latch needle is continuing the descending motion, the needle, at the loop casting edge on the plating, it passes the thread which is inlaid through the needle stem through the previous loop in order to create new knot. Therefore, the newly fed thread becomes a loop. Plating rail then starts repeating the fabric grabbing process.

In warp knitting, Raschel type machines can be adjusted as single sided knitting and double sided knitting machines. The rail needle (equipped with latch needles) ascends along the vertical direction and descends and the same motion is also performed by the latch of the needle. The loop reed rail performs forward-backward motion along the horizontal direction. The loop casting rail is maintained fixed. The inlay rail where the reed needles with holes are present also performs forward-backward motion and lateral motion along the horizontal direction.

Layout of the knitting elements results in a 170 degrees angle between the incoming warp thread and the fabric. Depending on the thread geometry, combination of the forces acting upon the needle is low, despite the high thread tension.

In all of warp knitting machines, wefts are positioned by means of a weft reserving device. In this method, threads which will be used in the fabric are first stored in a reserve introduced behind the machine. This means that in order to be added into the warp knit structure, threads of required lengths should be gathered in a straight form and kept ready.

The operating principle of weft reserve placement device is as follows: Weft threads are compressed into a carrier introduced between two rotating reserve chains. This weft compressing operation is performed independent of loop forming. Thereafter, weft threads can be fed both to the knitting elements one by one and along the same direction with loop rows. Since they are used between lower laid-ins and needle loops, a fairly uniform entanglement is achieved at the fabric surface.

Weft or laid-in is a thread length which is placed continuously on the fabric surface. The thread does not form a loop or hanger because it is never inlaid to the needle head as a loop. In other words, it does not perform any upper inlaying. Instead, it is only inlaid behind the needle in the lower inlaying position.

Knit pile fabrics are knot binding fabrics comprising warp knitting, one sided thread, fiber loop or staple fiber yarn. However, pile structures may be on both sides of the structure.

In addition to pile devices, knit pile fabrics can be manufactured by different means such as pile plating reed, pile guides or pile (pol) reeds. Pile device is frequently used in the pile plating reed of tricot machines. The pile plating is introduced on the composite plating and performs lateral motion along the horizontal direction. During the warp knitting, one or several reeds during the lower inlaying form the pile loop with the help of the pile plating. The size of the pile loop increases with the height of the pile plating. Threads on the remaining reeds form the fabric floor.

In the prior art, patent application no. GB2339803A is found to be related to straight weft knitting machines. In the application, weft or warp inlays are placed inside double inlaid knit structures by performing some modifications on weft straight knitting machine. For this, knitting heads are separated from each other and an endless chain mechanism is used in order to allow the knitting heads to operate in the same direction and at the same speed. Thereby, an area through which warp laid-in threads can be guided and it becomes possible to introduce guides in order to allow feeding the knitting area with warps. Warp guides are connected to each other by means of a metal plate and their positions are fixed in line at the knitting area again by the help of the same plate. Warp guides does not move and since warp guides are positioned in the middle of the knitting are in such a way, positioning shuttles with knitting heads should also be improved, a shuttle (thread guide) is fixed to each knitting head and knitting heads are separated in to two parts which are front and back, in order to achieve a two system machine. Thereby, while a row is being knit, the shuttle fixed on the knitting head on the front needle bearing feeds knitting thread, while in the other row, the shuttle fixed on the head on the back needle bearing feeds knitting thread. Therefore, knitting thread passes in front of the warp laid-ins in one row, and passes behind it in the other row, in order to form the loops. Thereby a double bearing (e.g. ribana) is knit, however, a different thread is fed into each row of it and it becomes possible warp inlaying with the thread fed from the warp guides during knitting. No alterations on the machine have been performed on the machine except some modifications to the shuttles to be used in order to allow weft feed during knitting. In order to ensure a proper weft laid-in thread to be fed into the knitting area, presser feet are adapted to pass it through a tube and between two bearings into the fabric.

Patent application EP0090289A1 relates to orthopaedic bandages comprising moisture hardenable polyurethane resins. Dressing material for making supporting dressings consists in one embodiment of a Raschel of natural cotton fiber as carrier material having a moisture-curing isocyanate resin coated and / or impregnated, wherein a ratio of the average spacing between two warp threads to the average spacing between two weft threads is less than 1.5.

Patent application WO2007095655A1 relates to a towel product consisting of a textile base material and a pile attached to said base material, said product being characterised in that the base material and/or the pile at least partially contain a cellulose fibre selected from the group consisting of viscose fibres, modal fibres, polynosic fibres and Lyocell, said cellulose fibre having a linear density of more than 1.7 dtex and up to 4.5 dtex. In one example, the pile yarn from modal staple fibres is blended with PVA fibres removed after fabric forming in a subsequent stage.

Patent application EP0429802A2 relates to a textile fabric with opposed absorbent and non-absorbent layers and method of fabricating the same. An integrally fabricated textile fabric has a relatively thick, dense liquid retaining absorbent pile layer of hydrophilic yarns and a non-absorbent napped layer of hydrophobic yarns at opposite faces of the fabric integrated with an intermediate ground yarn structure. The napped hydrophobic yarn layer serves to wick liquid to the absorbent hydrophilic yarn layer while resisting return flow leakage. The fabric is preferably fabricated on a warp knitting machine wherein a set of hydrophilic yarns preferably entirely from cotton are warp knitted by the bottom machine guide bar in overfed needle loops at the technical face of the fabric, a set of hydrophobic yarns are warp knitted on the top machine guide bar in needle loops and extended nappable underlaps at the technical back of the fabric, and two sets of ground yarns are warp knitted by a respective pair of middle guide bars intermediate the fabric faces.

Due to the very high tension between the needle rail and the inlay rail in warp knitting machines, it is not possible to use 100% cotton yarns in warp knitting devices. The yarns passing through the needle rail have to be stressed during the left-right motion of the inlay rail. Since the inlay rail moves the thread with varying force and acceleration to create this motion, the yarn from the beam is exposed to breaking forces. Therefore, synthetic or synthetic blended fibers are used in these machines. It is known that the tensile strength of the 100% cotton fiber is much lower than the tensile strength of synthetic yarns.

Therefore, the aforementioned disadvantages and drawbacks have made it necessary to make an innovation in the related technical field.

### Object of the Invention

The present invention relates to obtaining warp knit fabrics from cotton yarn using warp knitting machines which meet the aforementioned requirements, overcome all the disadvantages and provide further advantages.

The object of the invention is to increase the elasticity and tensile strength of yarn by modifying torsion and yarn twisting values of the yarn made of 100% cotton.

The object of the invention is to allow weaving of 100% cotton yarns with enhanced strength with respect to twisting number, in warp knitting machines.

The object of the invention is to obtain terry or non- terry warp knit fabric with or without pile from 100% cotton yarns.

In order to achieve the aforementioned objects, the invention is a method for obtaining warp knit fabric from cotton yarns in warp knitting fabrics, intended to be used in designs of different constructions, comprising the process steps of:
using cotton yarn of two or more multiple twisted cotton yarns as the warp yarn ,
using carded cotton as the ground yarn and weaving the fabric in a warp knitting machine,
applying conventional bleaching and dying processes,
characterized in comprising the process steps of:
   using cotton yarn through twisting two or more multiple twisted cotton yarns as a ground yarn, and twisted with PVA yarn as the pile yarn ,
   treating the obtained fabric with acid at 90 °C for 20 minutes and removing the PVA yarn from the fabric.

In order to achieve the objects of the invention, a pile plate is added to the warp knitting machine in order to obtain pile and terry warp knit fabric The structural and characteristic features and all of the advantages of the invention shall become apparent with the detailed description given below and therefore, assessment should be based on this detailed description.

### Brief Description of Drawings

- **Figure-1:**: A detail view of the warp knit fabric.
- **Figure-2:**: A detail view of the pile yarn and warp yarn positions in the warp knit fabric.
- **Figure-3:**: A detail view of the warp yarn and ground yarn positions in the warp knit fabric.
- **Figure-4:**: A schematic view of the manufacturing principle of the warp knit fabrics (spacer fabric) in double needle railed Raschel machines.

The drawings may not be up to scale and details not crucial for understanding the invention may have been omitted. Additionally, at least substantially identical elements or elements having at least substantial functions are denoted with the same number.

### Parts References

**10.** Warp knit fabric
**11.** Warp yarn
**12.** Pile yarn
**13.** Ground yarn
**20.** Double needle railed Raschel machine
**21.** 1^{st} inlay rail
**22.** 2^{nd} inlay rail
**23.** 3^{rd} inlay rail
**24.** 4^{th} inlay rail
**25.** 1^{st} needle rail
**26.** 2^{nd} needle rail

### Detailed Description of the Invention

The method for obtaining warp knit fabric (spacer fabric) (10) from cotton yarns in warp knitting machines is disclosed herein detailed description without limiting the scope of the invention.

The invention relates to a method for obtaining terry or non-terry warp knit fabric (spacer fabric) (10) with or without pile from 100% cotton yarns with increased elasticity and tensile strength due to modified torsion and twisting values, using warp knitting machines, intended to be used in the design of different constructions. A detail view of the warp knit fabric (10) is given in Figure 1.

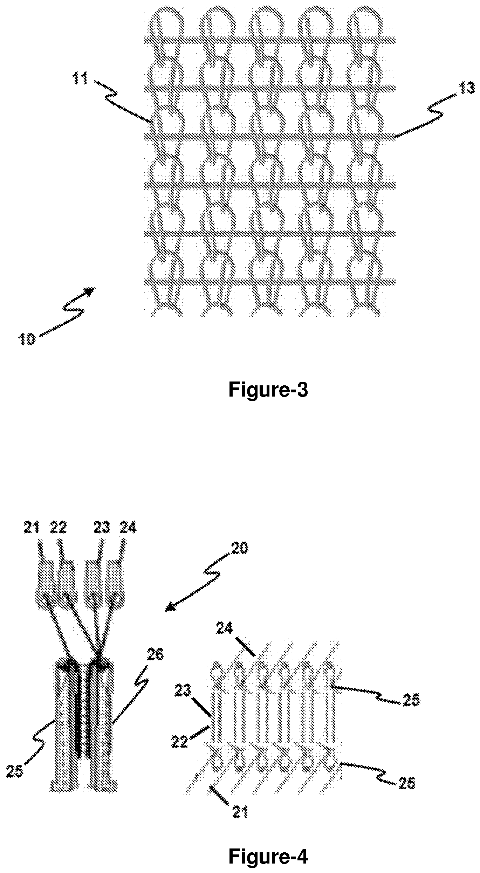

In weaving the warp knit fabric, 80/2 Ne combed cotton as the warp yarns (11), 20/2 Ne carded cotton as the ground yarns (13), and 16/1 Ne cotton as the pile yarns (12) are used. Figure 2 shows a detail view of the position of the pile yarn (12) and warp yarn (11) in the warp knit fabric (10), and Figure 3 shows a detail view of the position of the warp yarn (11) and the ground yarn (13) in the warp knit fabric (10).

While obtaining the pile yarn (12), cotton yarn is twisted in opposite direction with PVA (polyvinyl alcohol).

The warp knit fabric (10) of the invention is woven with raw yarns and white tops dyeing is applied. During the tops dyeing process, before the bleaching process, the fabric is treated with acid at 90 °C for 20 minutes. Thereby the PVA fiber is removed from the raw product. In Figure 4, a schematic view of the manufacturing principle of the warp knit fabrics (spacer fabric) (10) in double needle railed Raschel machines is given.

### a method for obtaining warp knit fabric (spacer fabric) from 100% cotton yarns;

- 80/2 Ne cotton yarn with increased elasticity and tensile strength through use of two or more multiple twisting cotton yarn is used as the warp yarn (11),
- 16/1 Ne cotton yarn with increased strength through twisting two or more multiple twisting cotton yarn with thickness equal 0.5 or less than 0.5 with PVA yarn is used as the pile yarn (12),
- 20/2 Ne carded cotton obtained from two or more multiple twisting cotton yarn is used as the ground yarn (13) and the fabric is woven in warp knitting machine,
- The obtained fabric is treated with acid at 90 °C for 20 minutes and the PVA yarn is removed from the fabric,
- Consequently, the conventional bleaching and dying processes are applied and a warp knit fabric (10) composed of 100% cotton is obtained.

A feature of the invention is that acetic acid or formic acid may be used as the acid during removal of the PVA yarn from the obtained fabric.

A feature of the invention is that, during the step of obtaining pile yarn (12), the tension created between the needle rail and the inlay rail is decreased using the elasticity of the PVA thread.

A feature of the invention is that, it is possible to obtain pile and terry warp knit fabrics by adding a pile plate to the warp knitting machine used in the step of weaving the warp knit fabric.
Raw Fabric before the dyeing processes;
Width: 167 cm,
Weight: 380 g/m²
Fabric after the dyeing processes;
Width: 175 cm,
Weight: 320 g/m²

## Claims

1. A method for obtaining warp knit fabric (10) from cotton yarns (11, 12, 13) in warp knitting fabrics intended to be used in designs of different constructions, comprising the process steps of:
• using cotton yarn of two or more multiple twisted cotton yarns as the warp yarn (11),
• using carded cotton as the ground yarn (13) and weaving the fabric in a warp knitting machine,
• applying conventional bleaching and dying processes,
***characterized in** comprising the process steps of:*
• using cotton yarn through twisting two or more multiple twisted cotton yarns with PVA yarn as the pile yarn (12),
▪ using cotton yarn through twisting two or more multiple twisted cotton yarns as the ground yarn (13), and
• treating the obtained fabric with acid at 90 °C fo r 20 minutes and removing the PVA yarn from the fabric (10).

2. The method for obtaining warp knit fabric (10) according to claim 1, wherein the tension created between the needle rail and the inlay rail is decreased using the elasticity of the PVA yarn.

3. The method for obtaining warp knit fabric (10) according to claim 1, wherein pile and terry warp knit fabrics are obtained by adding a pile plate to the warp knitting machine.

4. The method for obtaining warp knit fabric (10) according to claim 1, wherein the mentioned acid is acetic acid or formic acid.

5. A warp knit fabric (10) having 100% cotton composition, **characterized by** cotton yarn of two or more multiple twisted cotton yarns as a warp yarn (11) and as a ground yarn (13), the ground yarn (13) being made from carded cotton, and cotton yarn as the pile yarn (12).

## Patentansprüche

1. Verfahren zum Erhalten von Kettengewirk (10) aus Baumwollgarnen (11, 12, 13) in Kettengewirken, die zur Verwendung in Designs mit unterschiedlichen Konstruktionen gedacht sind, umfassend die folgenden Prozessschritte:
• Verwenden von Baumwollgarn aus zwei oder mehr mehrfach gezwirnten Baumwollgarnen als Kettgarn (11),
• Verwenden von kardierter Baumwolle als Grundgarn (13) und Weben des Gewebes auf einer Kettenwirkmaschine,
• Anwenden von herkömmlichen Bleich- und Färbeprozessen,
***dadurch gekennzeichnet, dass** es die folgenden Prozessschritte umfasst:*
• Verwenden von Baumwollgarn durch Verzwirnen von zwei oder mehr mehrfach verzwirnten Baumwollgarnen mit PVA-Garn als Florgarn (12),
• Verwenden von Baumwollgarn durch Verzwirnen von zwei oder mehr mehrfach verzwirnten Baumwollgarnen als Grundgarn (13), und
• Behandeln des erhaltenen Gewebes mit Säure bei 90 °C für 20 Minuten und Entfernen des PVA-Garns aus dem Gewebe (10).

2. Verfahren zum Erhalten von Kettengewirk (10) nach Anspruch 1, wobei die Spannung, die zwischen der Nadelschiene und der Einlageschiene erzeugt wird, unter Verwendung der Elastizität des PVA-Garns verringert wird.

3. Verfahren zum Erhalten von Kettengewirk (10) nach Anspruch 1, wobei Flor- und Frottee-Kettengewirke durch Hinzufügen einer Florplatte zu der Kettenwirkmaschine erhalten werden.

4. Verfahren zum Erhalten von Kettengewirk (10) nach Anspruch 1, wobei die genannte Säure Essigsäure oder Ameisensäure ist.

5. Kettengewirk (10) mit einer Zusammensetzung aus 100 % Baumwolle, **gekennzeichnet durch** Baumwollgarn aus zwei oder mehr mehrfach gezwirnten Baumwollgarnen als Kettgarn (11) und als Grundgarn (13), wobei das Grundgarn (13) aus kardierter Baumwolle besteht, und Baumwollgarn als Florgarn (12).

## Revendications

1. Procédé permettant d'obtenir un tissu tricoté en mailles jetées (10) à partir de fils de coton (11, 12, 13) dans des tissus tricotés en mailles jetées destinés à être utilisés dans des conceptions de différentes constructions, comprenant les étapes de processus de :
• utilisation du fil de coton composé de deux, ou plus, fils de coton retordus multiples en tant que fil de chaîne (11),
• utilisation du coton cardé en tant que fil de base (13) et tisser le tissu dans un métier à tricoter en mailles jetées,
• application de processus classiques de blanchiment et de teinture, *caractérisé en comprenant les étapes de processus de :*
• utilisation du fil de coton en retordant deux, ou plus, fils de coton retordus multiples avec du fil PVA en tant que fil de velours (12),
• utilisation du fil de coton en retordant deux, ou plus, fils de coton retordus multiples en tant que fil de base (13), et
• traitement du tissu obtenu avec un acide à 90°C pendant 20 minutes et retrait du fil PVA du tissu (10).

2. Procédé permettant l'obtention d'un tissu tricoté en mailles jetées (10) selon la revendication 1, ladite tension créée entre le rail d'aiguille et le rail d'incrustation étant diminuée à l'aide de l'élasticité du fil PVA.

3. Procédé permettant d'obtenir un tissu tricoté en mailles jetées (10) selon la revendication 1, des tissus tricotés en mailles jetées en velours et éponge étant obtenus en ajoutant une plaque à velours au métier à tricoter en mailles jetées.

4. Procédé permettant l'obtention d'un tissu tricoté en mailles jetées (10) selon la revendication 1, ledit acide mentionné étant l'acide acétique ou l'acide formique.

5. Tissu tricoté en mailles jetées (10) comportant une composition 100 % coton, **caractérisé par** un fil de coton de deux, ou plus, fils de coton retordus multiples en tant que fil de chaîne (11) et en tant que fil de base (13), le fil de base (13) étant fabriqué à partir de du coton cardé et le fil de coton en tant que fil de velours (12).
